Europäisches Patentamt

European Patent Office

Office européen des brevets

(19)

(11) **EP 1 151 590 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **H04L 27/22**, H03J 7/00, H04B 7/26, H03D 3/00

(21) Anmeldenummer: **00910512.3**

(22) Anmeldetag: **01.02.2000**

(86) Internationale Anmeldenummer:
**PCT/DE00/00301**

(87) Internationale Veröffentlichungsnummer:
**WO 00/049781 (24.08.2000 Gazette 2000/34)**

(54) **VERFAHREN ZUR DETEKTION VON PILOTTÖNEN**

METHOD FOR DETECTING PILOT SIGNALS

PROCEDE DE DETECTION DE SIGNAUX PILOTES

(84) Benannte Vertragsstaaten:
**AT BE CH CY DE DK ES FI FR GB GR IE IT LI LU MC NL PT SE**

(30) Priorität: **15.02.1999 DE 19906293**

(43) Veröffentlichungstag der Anmeldung:
**07.11.2001 Patentblatt 2001/45**

(73) Patentinhaber: **Infineon Technologies AG 81669 München (DE)**

(72) Erfinder:
 • **YANG, Bin**
 **D-81735 München (DE)**
 • **HARTMANN, Ralf**
 **D-81377 München (DE)**

(74) Vertreter: **Graf Lambsdorff, Matthias, Dr. et al Patentanwälte Lambsdorff & Lange Dingolfinger Strasse 6 81673 München (DE)**

(56) Entgegenhaltungen:
**US-A- 5 343 497**

 • **CHARBIT G ET AL: "Frame synchronisation and frequency-carrier estimation for GSM mobile communications" EPMCC. EUROPEAN PERSONAL MOBILE COMMUNICATIONS CONFERENCE TOGETHER WITH ITG-FACHTAGUNG, MOBILE KOMMUNIKATION,XX,XX, Bd. 145, Nr. 145, 30. September 1997 (1997-09-30), Seiten 449-457, XP002100275**
 • **COUPE F G A: "DIGITAL FREQUENCY DISCRIMINATOR" ELECTRONICS LETTERS,GB,IEE STEVENAGE, Bd. 15, Nr. 16, 2. August 1979 (1979-08-02), Seiten 489-490, XP000761150 ISSN: 0013-5194**
 • **PATENT ABSTRACTS OF JAPAN vol. 1998, no. 04, 31. März 1998 (1998-03-31) & JP 09 312640 A (SONY CORP), 2. Dezember 1997 (1997-12-02) & US 5 907 558 A (WATANABE) 25. Mai 1999 (1999-05-25)**

## Beschreibung

Die vorliegende Erfindung betrifft allgemein ein Verfahren zur Detektion von Pilottönen. Pilottöne sind Sinusschwingungen bekannter Frequenz, die beispielsweise in Kommunikationssystemen, insbesondere in Mobilfunksystemen zur Anwendung kommen. In diesen Mobilfunksystemen hat man häufig die Aufgabe, nach Pilottönen zu suchen.

Beispielsweise erfolgt in digitalen Mobilfunksystemen, die nach dem GSM/DCS1800/PCS1900 Standard arbeiten, die Organisation des Funkverkehrs über Organisationskanäle. Damit eine Mobilstation über eine Feststation mit dem Netz Verbindung aufnehmen kann, muß sie als erstes diesen Organisationskanal detektieren und aufsuchen. Zur Detektion des Organisationskanals erfolgt eine Suche nach festgelegten Impulsfolgen, die diesen Organisationskanal kennzeichnen.

Beim oben angegebenen System werden dazu Impulsfolgen verwendet, sogenannte "Frequency Correction Bursts (FCB)", die aus einer Folge von 148 Nullen bestehen.

Im hier betrachteten System wird für die Übertragung das sogenannte GMSK-Modulationsverfahren (Gaussian Minimum Shift Keying) verwendet. Dabei wird eine Trägerfrequenz FT (beispielsweise 900 MHz) mit dem zu übertragenden Signal, also hier insbesondere auch mit dem speziell interessierenden FCB-Signal moduliert. Die sich ergebende Frequenz liegt bei FT+67,7 kHz, das heißt um 67,7 kHz über der Trägerfrequenz. Die FCB-Impulsfolge von 148 Nullen wird dadurch in ein reines Sinussignal überführt. Im Basisband bedeutet das, daß die Phasendifferenz benachbarter Abtastwerte im Idealfall (ohne Kanalverzerrung und Rauschen) 90° beträgt, wenn man davon ausgeht, daß eine Abtastung im Bittakt (4*67,7 = 270,8 kHz) erfolgt.

Aus dem Stand der Technik sind verschiedene Verfahren zur FCB-Suche bekannt. So ist beispielsweise in dem Artikel "Anfangssynchronisation der Mobilstation im D-Netz" von G. Frank und W. Koch, PKI Tech. Mitt. 1 (1990), Seiten 43-49 ein Verfahren zur FCB-Suche beschrieben. Bei diesem Verfahren beginnt die FCB-Suche mit einer Frequenzverschiebung durch eine Multiplikation aller (I,Q)-Abtastwerte des empfangenen Signals mit $\exp(-jk\pi/2)$. Jeder Abtastwert Z zum Zeitpunkt k läßt sich in der komplexen Ebene darstellen als $Z(k) = I(k) + jQ(k)$. Das heißt, das empfangene Signal wird um 67,7 kHz nach unten verschoben, so daß seine Mittenfrequenz nach der Frequenzverschiebung 0 Hz beträgt. Es erfolgt anschließend eine Tiefpaßfilterung des Signals. Wenn es sich um das FCB-Signal handelt, so passiert dieses das Filter; andere Signale werden hingegen wegen ihrer großen Bandbreite weitgehend unterdrückt. Es erfolgt anschließend eine Betragsbildung des gefilterten Signals, was im Idealfall einen rechteckähnlichen Impuls von der Dauer eines FCB-Signals ergibt. Im Gegensatz dazu herrscht in der übrigen Zeit aufgrund der Modulation mit zufälligen Datenbits ein rauschähnliches Signal vor. Für den rechteckähnlichen Impuls läßt sich ein optimales Suchfilter angeben. Es entspricht einer gleitenden Mittelwertbildung über die Dauer eines FCB. Ein FCB gilt als gefunden, wenn der Maximalwert des gefilterten Signals eine vorher festgelegte Schwelle überschreitet. Die Position des Maximalwertes markiert das Ende des detektierten FCB-Signals.

Das in diesem Aufsatz beschriebene Verfahren hat den Nachteil, daß der Maximalwert des gefilterten Signals von den momentanen Signalamplituden abhängt und deshalb starken Fading-Schwankungen unterworfen ist. Für eine sichere FCB-Suche ist also eine adaptive Amplitudenregelung notwendig. Auch der Tiefpaß muß von hoher Güte sein und seine Implementierung ist deswegen aufwendig. Darüber hinaus ist dieses Verfahren sehr empfindlich gegenüber einer Frequenzverstimmung zwischen der Mobil- und Basisstation. In der Praxis ist daher eine Mittelung des Maximalwertes über mehrere Beobachtungsintervalle erforderlich.

Ein weiteres Verfahren ist in dem Artikel "Synchronisation einer Mobilstation im GSM-System DMCS 900 (D-Netz)" von H. Neuner, H. Bilitza, S. Gärtner in Frequenz 47 (1993)3-4, Seiten 66-72 beschrieben. Bei diesem Verfahren wird die Phasendifferenz jedes vierten Abtastwertes des empfangenen Signals ausgewertet. Dem Verfahren liegt die Beobachtung zugrunde, daß für die Dauer eines FCB-Signals solche Phasendifferenzen im Idealfall null sind. Da, wie oben schon angegeben, die Phasendifferenz zweier benachbarter Abtastwerte 90 Grad beträgt, beträgt die Phasendifferenz zwischen vier Abtastwerten 4x90 = 360 Grad oder null Grad. Durch einen für jede Phasendifferenz neu berechneten Gültigkeitsbereich werden Störungen (Fading) berücksichtigt. Ein FCB-Signal gilt als gefunden, wenn eine hinreichend große Anzahl von vernachlässigbar kleinen Phasendifferenzen vorliegt.

Problematisch bei diesem Verfahren ist die Positionsbestimmung des FCB-Signals, da nur jeder vierte Abtastwert ausgewertet wird. Da das hier beschriebene Verfahren die Bestimmung der Phasendifferenz zwischen Abtastwerten erforderlich macht, muß, um aus den Quadraturkomponenten des abgetasteten empfangenen Signals die Phase des Abtastwertes zu berechnen, die Arkustangensfunktion verwendet werden. Dafür liegt aber bei fast allen Signalprozessoren keine Hardwareunterstützung vor, so daß die Berechnung durch eine aufwendige Reihenentwicklung approximiert wird, was entsprechend Rechenzeit benötigt.

Ein drittes Verfahren des Standes der Technik ist ein bei der Firma Siemens von Dr. Ralf Hartmann entwickeltes Verfahren, das dem Verfahren von Frank und Koch ähnelt. Dieses Verfahren benutzt zwei frequenzselektive Kammfilter, von denen ein Filter FCB-Signale mit der Frequenz 67,7 kHz ungehindert durchläßt und das andere Filter FCB-Signale voll sperrt. Von beiden gefilterten Signalen werden Beträge und dann gleitende Mittelwerte gebildet. Anschließend wird der Quotient der beiden Mittelwerte gebildet und mit einem vorher festgelegten Schwellwert verglichen. Unterschreitet der Quotient den Schwellwert, so gilt ein FCB als gefunden. Die Position des Minimums des Quotienten markiert das Ende des FCB-Signals.

Dieses Verfahren wurde bereits in Chipsätzen für GSM-Handies erfolgreich eingesetzt. Da man durch die Quotientenbildung eine Unempfindlichkeit gegenüber Amplitudenschwankungen erreicht, so kann die im Verfahren nach Frank und Koch notwendige Amplitudenregelung entfallen. Dafür benötigt jedoch die zur Quotientenbildung notwendige Division ebenfalls noch relativ viel Rechenzeit. Weiterhin ist das Verfahren empfindlich gegenüber einer Frequenzverstimmung. Bei einer Frequenzverstimmung läßt das eine Filter das Signal nicht mehr vollständig durch, und das andere Filter sperrt das Signal nicht mehr völlig. Die Folge ist, daß der Minimalwert des Quotienten erheblich ansteigt und der bestenfalls für eine minimale Frequenzverstimmung ausgelegte Schwellwert nicht mehr passend ist, und daher die ganze FCB-Suche unsicher wird.

Aus der Patentanmeldung DE 197 43 191 von R. Hartmann, B. Yang mit dem Titel "Verfahren zur Suche nach Pilottönen" (Anmeldedatum 30. September 1997) ist ein weiteres Verfahren zur Suche nach solchen Pilottönen bekannt. Dieses Verfahren verwendet eine sogenannte differentielle Symbolschätzung. Dabei werden nicht die exakten Phasendifferenzen aufeinanderfolgender (I,Q) Abtastwerte des empfangenen Signals, wie beim Verfahren von Neuner, Bilitza und Gärtner, ermittelt. Statt dessen wird nur untersucht, ob die Phasendifferenzen aufeinanderfolgender Abtastwerte im Intervall $[0, \pi)$ oder $[-\pi, 0)$ liegt. Beide Fälle entsprechen einem gesendeten Symbol von 1 ("+1") beziehungsweise 0 ("-1") des GMSK-Modulators. Da ein aus 148 Nullen bestehendes FCB-Signal nach der differentiellen Kodierung auf der Senderseite in 147 Einsen überführt wird, und außerhalb des FCB-Signals nahezu gleich viele Einsen und Nullen vorkommen, so kann nach einem FCB-Signal gesucht werden, indem nach einem langen, zusammenhängenden Block von Einsen gesucht wird.

Der Vorteil der differentiellen Symbolschätzung besteht in ihrer einfachen Realisierung. Wenn I(k) die In-Phase Komponente und Q(k) die Quadraturkomponente des Basisbandabtastwertes zum Zeitpunkt k darstellt, so gibt bei diesem Verfahren das Vorzeichen des Ausdrucks Q(k)*I(k-1)-I(k)*Q(k-1) im Idealfall das gesendete Symbol exakt wieder. Da ein Fading des abgetasteten Signals vereinzelt zu falschen Symbolschätzungen führt, werden die geschätzten Symbole (1 oder 0) mit einem sogenannten Matchfilter gefiltert. Das bedeutet, daß über die geschätzten Symbole ein Suchfenster fester Länge geführt wird und innerhalb des Fensters in Form einer gleitenden Summenbildung die Anzahl der Einsen gezählt wird. Das Maximum des so gefilterten Signals wird dann mit einem Schwellwert verglichen und bei Überschreiten des Schwellwerts auf das Vorhandensein eines FCB-Signals geschlossen.

Durch diese zusätzliche Filterung wird das dort geschilderte Verfahren zur Suche nach Pilottönen relativ unempfindlich gegenüber Amplitudenschwankungen, einem schlechten Signal-zu-Rausch-Verhältnis und Frequenzverstimmungen. Ein Problem bei diesem Algorithmus stellen jedoch die Störungen durch den Nachbarkanal dar. Wenn im Frequenzkanal, auf der gerade nach einem Pilotton, d.h. nach einem FCB-Signal, gesucht wird, momentan nichts übertragen wird, aber im Nachbarkanal ein leistungsstarkes, breitbandiges Signal übertragen wird, so werden häufig Reste dieses Signals auch im zu untersuchenden Frequenzkanal zu finden sein. Dieses Restsignal kann dann im untersuchten Frequenzkanal einen Pilotton in Form einer FCB-Impulsfolge vortäuschen.

Aufgabe der vorliegenden Erfindung ist es, das obige Verfahren der differentiellen Symbolschätzung so zu verbessern, daß es unempfindlich gegenüber Störungen aus Nachbarkanälen wird.

Die Aufgabe wird durch das erfindungsgemäße Verfahren gemäß Anspruch 1 der vorliegenden Anmeldung gelöst. Das erfindungsgemäße Verfahren verwendet die Idee einer Unterabtastung, bei der statt aufeinanderfolgender (I,Q)-Abtastwerte weiter auseinander liegende Abtastwerte zur Berechnung der Phasendifferenzen benutzt werden. Durch eine derartige Unterabtastung wird eine künstlich verstärkte Überlappung (Aliasing) der Restsignalspektren eines Nachbarkanals bewirkt. Dieser Aliasing-Effekt verwandelt ein ursprünglich farbiges Restsignalspektrum in ein annähernd weißes Spektrum. Dadurch verhält sich das Restsignal wie ein Rauschen und weist kaum noch Ähnlichkeit mit dem gesuchten FCB-Signal auf. Das FCB-Signal selbst hat ein schmalbandiges Spektrum, das kaum vom Aliasing-Effekt beeinflußt wird.

Nachfolgend wird das erfindungsgemäße Verfahren anhand der Zeichnungsfiguren im einzelnen beschrieben.

Fig. 1a zeigt symbolisch den untersuchten Kanal, sowie dessen oberen und unteren Nachbarkanal mit ihren jeweiligen Signalspektren.

Fig. 1b zeigt symbolisch den Amplitudengang des Basisbandfilters der Mobilstation.

Fig. 1c zeigt symbolisch die Restsignalspektren nach der Basisbandfilterung.

Fig. 2 zeigt symbolisch ein Blockschaltbild des erfindungsgemäßen Verfahrens zur Detektion von Pilottönen.

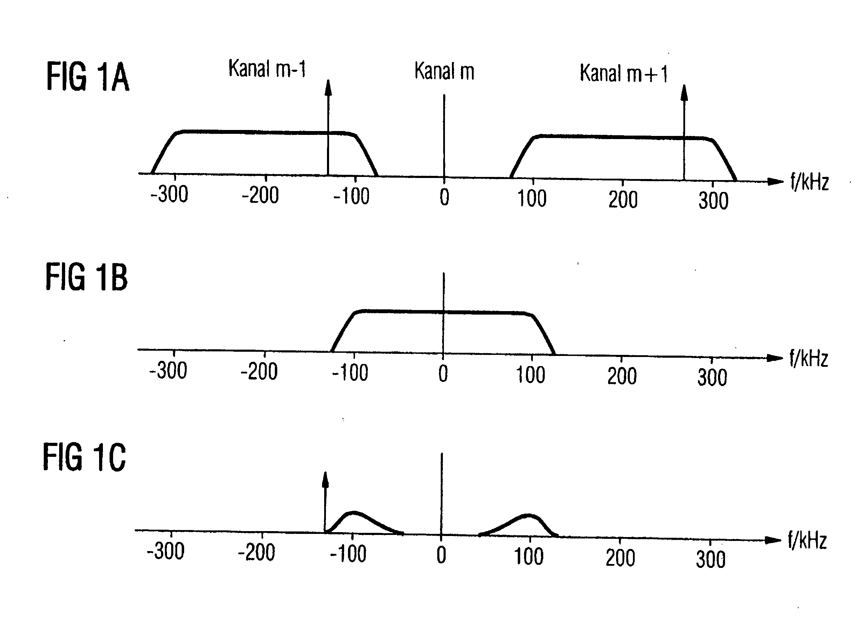

Die Figuren 1a bis 1c dienen zur Erläuterung der Problematik der Störungen des untersuchten Kanals durch seine Nachbarkanäle.

Fig. 1a zeigt die Situation, bei der auf dem zu untersuchenden Kanal m, d.h. dem Kanal, auf dem eine Suche nach einem Pilotton erfolgen soll, kein Signal gesendet wird. Auf seinem unteren Nachbarkanal m-1 und seinem oberen Nachbarkanal m+1 wird dagegen ein leistungsstarkes breitbandiges Signal übertragen. In den Mobilfunksystemen　　　　nach　　　　dem　　　　GSM/DCS1800/PCS1900 Standard liegen die Frequenzkanäle 200 kHz auseinander. Das FCB-Signal des unteren Kanals m-1 und des oberen Kanals m+1 ist dabei jeweils als senkrechte mit einem Pfeil versehene Linie dargestellt.

Fig. 1b zeigt den Amplitudengang des Basisbandfilters der Mobilstation, die nach dem Pilotton sucht.

Fig. 1c zeigt das Ergebnis, das man erhält, wenn man die in Fig. 1a gezeigten Signale mit einem Basisbandfilter, das den in Fig. 1b gezeigten Amplitudengang aufweist, filtert. Wie man sieht, ist das Basisbandfilter nicht in der Lage, die breitbandigen Signale von beiden Nachbarkanälen und das FCB-Signal vom unteren Nachbarkanal vollständig zu unterdrücken. Unglücklicherweise fällt darüberhinaus das breitbandige Restsignal vom oberen Nachbarkanal in einen Frequenzbereich, in dem auch das FCB-Signal des Kanals m zu finden ist. Das in der oben erwähnten Patentanmeldung DE 197 43 191 geschilderte Verfahren zur Suche nach Pilottönen kann also ein derartiges Restsignal nicht vom FCB-Signal des eigenen Kanals unterscheiden und würde das Restsignal fälschlicherweise als ein FCB-Signal detektieren.

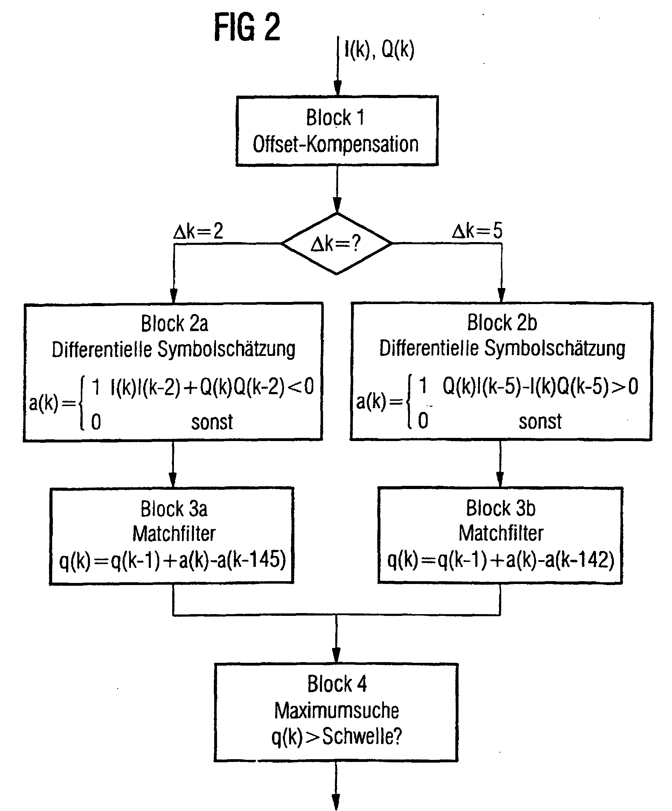

Das erfindungsgemäße Verfahren kann diese falsche Detektion des FCB-Signals verhindern. Fig. 2 zeigt in einem Blockschaltbild das erfindungsgemäße Verfahren zur Detektion von Pilottönen.

Das Signal des zu untersuchenden Kanals m wird zu einzelnen Zeitpunkten abgetastet. Jeder Abtastwert Z des zum Zeitpunkt k empfangenen Signals läßt sich dabei in der komplexen Darstellung angeben als $Z(k) = I(k) + jQ(k)$. Dabei sei $I(k)$ die In-Phase-Komponente des Basisband-Abtastwertes zum Zeitpunkt k und $Q(k)$ die Quadraturkomponente des Basisband-Abtastwertes zum Zeitpunkt k.

Die beiden Komponenten $I(k)$, $Q(k)$ werden in Block 1 einer sogenannten Offset-Kompensation unterworfen. Dadurch werden mögliche Gleichspannungsgrößen der Werte $I(k)$, $Q(k)$ kompensiert. Dies kann beispielsweise durch ein Notch-Filter oder eine blockorientierte Kompensation erfolgen.

Anschließend wird dann in den Blöcken 2a beziehungsweise 2b eine differentielle Symbolschätzung durchgeführt. Bisher wurden für die differentielle Symbolschätzung aufeinanderfolgende Abtastwerte $I(k)$, $Q(k)$ verwendet. Bei der erfindungsgemäßen unterabtastenden differentiellen Symbolschätzung werden zur Berechnung der Phasendifferenzen weiter auseinander liegende Abtastwerte verwendet. Es erfolgt also eine Unterabtastung. Allgemein gesagt werden zur Bildung der Phasendifferenzen $I(k)$, $Q(k)$ und $I(k-\Delta k)$, $Q(k-\Delta k)$ verwendet, wobei $\Delta k \geq 2$ ist.

Im Block 2a wird eine Unterabtastung mit $\Delta k = 2$ gewählt. Dazu wird geprüft, ob die Phasendifferenz zwischen $I(k) + j*Q(k)$ und $I(k-2) + j*Q(k-2)$ einen Phasenunterschied von $\Delta k*\pi/2 = \pi$ aufweist, das heißt im Intervall $(\pi/2, 3\pi/2)$ liegt. Das kann mit einer einfachen Abfrage des Wertes $I(k)*I(k-1) + Q(k)*Q(k-2)$ erfolgen. Ist dieser Wert kleiner null, so stellt das geschätzte Symbol $a(k)$ eine Eins dar. Ist dieser Wert größer oder gleich null, so stellt das geschätzte Symbol $a(k)$ eine Null dar.

Im Block 2b wird dagegen eine Unterabtastung mit $\Delta k = 5$ vorgenommen. Dazu wird geprüft, ob die Phasendifferenz zwischen $I(k) + j*Q(k)$ und $I(k-5) + j*Q(k-5)$ einen Phasenunterschied von $\Delta k*\pi/2 = 5*\pi/2$, was äquivalent $\pi/2$ ist, aufweist, das heißt, im Intervall $(0, \pi/2)$ liegt. Das kann mit einer einfachen Abfrage des Wertes $Q(k)*I(k-5) - I(k)*Q(k-5)$ erfolgen. Ist dieser Wert größer Null, so stellt das geschätzte Symbol $a(k)$ eine Eins dar. Ist dieser Wert kleiner oder gleich Null, so stellt das geschätzte Symbol $a(k)$ eine Null dar.

Eine derartige Unterabtastung hat, wie oben schon erwähnt, eine künstlich verstärkte Überlappung (Aliasing) der Restsignalspektren der Nachbarkanäle zur Folge. Dieser Aliasing-Effekt verwandelt ein ursprünglich farbiges Restsignalspektrum, das nach der Filterung mit dem Basisbandfilter ohne diesen Aliasing-Effekt vorhanden ist, in ein annähernd weißes Spektrum. Dadurch verhält sich das Restsignal wie weißes Rauschen und weist kaum noch Ähnlichkeit mit dem FCB-Signal auf, so daß eine irrtümliche Detektion verhindert wird.

Das eigentliche FCB-Signal hat ein schmalbandiges Spektrum, das kaum vom Aliasing-Effekt beeinflußt wird.

Der Aliasing-Effekt ist um so stärker, je größer $\Delta k$ gewählt wird. Auf der anderen Seite gibt es aber Gründe, die gegen einen zu großen Wert von $\Delta k$ sprechen:

a) Ein zu großer Wert von $\Delta k$ führt auch zu einem breiten Spektrum des eigentlichen FCB-Signals, was zu eine Nichtdetektion von korrekten FCB-Signalen führen könnte.

b) Durch die Unterabtastung verstärkt sich der Effekt einer Frequenzverstimmung. Beispielsweise impliziert eine Frequenzverstimmung von 20 kHz eine Phasenverschiebung von $(20/270,833)*360° \approx 26,6°$ für benachbarte (I,Q)-Werte ($\Delta k = 1$). Wählt man $\Delta k = 2$, dann entspricht eine Frequenzverstimmung von 20 kHz einer Phasenverschiebung von $2*26,6° = 53,2°$. Aus diesem Grunde sollte man $\Delta k$ möglichst klein wählen, damit auch FCB-Signale mit großer Frequenzverstimmung korrekt detektiert werden können.

c) Es muß sichergestellt werden, daß ein FCB-Signal vom unteren Nachbarkanal (siehe Fig. 1c) nicht durch die Unterabtastung in ungefähr denselben Frequenzbereich verlagert wird wie ein FCB-Signal des Kanals m. In diesem Fall könnte die Mobilstation, welche die Detektion der Pilottöne durchführt, FCB-Signale vom Kanal m-1 und vom Kanal m nicht voneinander unterscheiden. Ein solcher Fall ergibt sich beispielsweise für ∆k = 4.

Wie man sieht, widersprechen sich die oben genannten Anforderungen teilweise. Umfangreiche Tests haben gezeigt, daß ∆k =2 und ∆k = 5 zwei sinnvolle Kompromisse für GSM/DCS1800/PCS1900 Systeme darstellen.

Die Wahl von ∆k = 2, wie im Block 2a in Fig. 2 dargestellt, gestattet die Detektion von FCB-Signalen, die eine große Frequenzverstimmung aufweisen, und eignet sich somit für eine Anfangssynchronisation von Mobilstation und Basisstation. Allerdings verbleibt wegen der nicht hinreichenden Unterabtastung ein kleines Restrisiko für Nachbarkanalstörungen.

Die Wahl von ∆k = 5, wie im Block 2b in Fig. 2 dargestellt, verhindert eine Nachbarkanalstörung vollständig. Dafür können hier nur FCB-Signale mit kleiner Frequenzverstimmung detektiert werden. Diese Betriebsart eignet sich deswegen besonders gut zur Überwachung von Nachbarzellen eines Mobilfunknetzes während des Funkbetriebs.

Fading-Störungen können bei den obigen Überprüfungen vereinzelt zu falschen Symbolschätzungen führen. Deswegen werden die geschätzten Symbole a (1 oder 0) in den Blöcken 3a beziehungsweise 3b mit einem Matchfilter gefiltert. Das heißt, über die geschätzten Symbole wird ein Suchfenster mit einer vorbestimmten Länge L geführt. Es wird dabei in einer Art gleitenden Summenbildung die Anzahl der Einsen innerhalb des Suchfensters gezählt. Als Formel läßt sich das folgendermaßen ausdrücken:

$$q(k) = q(k-1)+a(k)-a(k-L),$$

wobei q(k) die Symbolsumme, a(k) das oben geschätzte Symbol und L die Länge des Suchfensters ist. Wenn das FCB-Signal aus 148 Nullen besteht, das nach der differentiellen Kodierung auf der Sendeseite in 147 Einsen überführt wird, so berechnet sich L zu L = 148 - (∆k+1). Für ∆k = 2 ergibt sich somit L = 145, wie das im Block 3a dargestellt ist, und für ∆k = 5 ergibt sich L = 142, wie das im Block 3b dargestellt ist.

In beiden Fällen wird das Maximum der in den Blöcken 3a beziehungsweise 3b gebildete Symbolsumme q(k) anschließend mit einem Schwellwert S verglichen, und bei Überschreiten des Schwellwertes wird auf das Vorhandensein eines FCB-Signals geschlossen. Aus der Position des Maximums läßt sich dann auch auf die Position des FCB-Signals schließen. Beispielsweise kann als zeitlicher Ort der gesuchten Impulsfolge der Zeitpunkt angegeben werden, der zwischen den Zeitpunkten liegt, an dem die Symbolsumme (q(k)) zum ersten Mal und an dem sie zum letzten Mal den Summenschwellwert (S) überschreitet.

Das erfindungsgemäße Verfahren zur Detektion von Pilottönen, insbesondere zur Suche nach Impulsfolgen, den sogenannten FCB-Signalen, die in Mobilfunksystemen einen Organisationskanal kennzeichnen, bietet gegenüber den aus dem Stand der Technik bekannten Verfahren insbesondere den zusätzlichen Vorteil, daß es gegenüber Störungen von benachbarten Kanälen relativ unempfindlich ist.

**Patentansprüche**

1. Verfahren zur Erkennung einer Impulsfolge, die bekannte Werte 0 oder 1 und eine bekannte Länge (LI) aufweist, in einem Signal, **gekennzeichnet durch** die folgenden Schritte:

   a) Gewinnen von Abtastwerten eines Signals zu aufeinanderfolgenden Zeitpunkten k, wobei diese Zeitpunkte k eine zeitliche Differenz von ∆k ≥ 2 aufweisen;
   b) Ermitteln, ob die Phasendifferenz dieser Abtastwerte des Signals im Bereich von mod (∆k*π/2,2π) - π/2 bis mod(∆k*π/2,2π) + π/2 liegt, was einem gesendeten Symbol "1" (a(K)) (a) entspricht, oder ob sie nicht in diesem Bereich liegt, was einem gesendeten Symbol von "0" (a (K)) entspricht;
   c) Filtern dieser geschätzten Symbole (a(k)), indem ein Suchfenster mit der Suchfensterlänge (L), die gleich der um (∆k + 1) verminderten Länge (LI) der zu erkennenden Impulsfolge ist, über die aufeinanderfolgend geschätzten Symbole (a(k)) geführt wird, und jedesmal innerhalb des Suchfensters die Symbolsumme (q(k)) der geschätzten Symbole (a(k)) gebildet wird;
   d) Vergleichen der Symbolsumme (q(k)) mit einem Summenschwellwert (S); und
   e) wenn die Symbolsumme (q(k)) größer oder gleich dem Summenschwellwert (S) ist, Anzeige des Vorhandenseins der gesuchten Impulsfolge und des zeitlichen Ortes der gesuchten Impulsfolge.

2. Verfahren nach Anspruch 1, **dadurch gekennzeichnet, daß** vor dem Ausführen von Schritt a) die Abtastwerte einer Gleichspannungskompensation unterzogen werden.

3. Verfahren nach Anspruch 1 oder 2, **dadurch gekennzeichnet, daß** die zeitliche Differenz ∆k den Wert 2 oder den Wert 5 annimmt.

4. Verfahren nach einem der vorhergehenden Ansprüche, **dadurch gekennzeichnet, daß** es sich bei der zu erkennenden Impulsfolge um eine Folge von 148 Nullen handelt, mit der in einem Mobilfunksystem ein Organisationskanal **gekennzeichnet** wird.

5. Verfahren nach einem der vorhergehenden Ansprüche, **dadurch gekennzeichnet, daß** als zeitlicher Ort der gesuchten Impulsfolge der Zeitpunkt angegeben wird, der zwischen den Zeitpunkten liegt, an dem die Symbolsumme (q(k)) zum ersten Mal und an dem sie zum letzten Mal den Summenschwellwert (S) überschreitet.

## Claims

1. Method for identification of a pulse sequence which has known values 0 and 1 and a known length (LI) in a signal, **characterized by** the following steps:

   a) obtaining samples of a signal at successive times k, with there being a time difference of $\Delta k \geq 2$ between these times k;
   b) determining whether the phase difference between these samples of the signal is in the range mod $(\Delta k^*\pi/2.2\pi) - \pi/2$ to mod $(\Delta k^*\pi/2.2\pi) + \pi/2$, which corresponds to a transmitted symbol "1" (a), or whether it is not in this range, but corresponds to a transmitted symbol of "0" (q(k));
   c) filtering these estimated symbols (a(k)), by placing a search window with a search window length (L), which is equal to the length (LI) of the pulse sequence to be identified minus $(\Delta k + 1)$, over the successively estimated symbols (a(k)), and by in each case forming the symbol sum (q(k)) of the estimated symbols (a(k)) within the search window;
   d) comparing the symbol sum (q(k)) with a sum threshold value (S); and
   e) if the symbol sum (q(k)) is greater than or equal to the sum threshold value (S), indicating the presence of the sought pulse sequence and the timing of the sought pulse sequence.

2. Method according to Claim 1, **characterized in that**, before carrying out step a), the samples are subjected to DC voltage compensation.

3. Method according to Claim 1 or 2, **characterized in that** the time difference $\Delta k$ assumes the value 2 or the value 5.

4. Method according to one of the preceding claims, **characterized in that** the pulse sequence to be identified is a sequence of 148 zeros, which is used to identify an organization channel in a mobile radio system.

5. Method according to one of the preceding claims, **characterized in that** the timing of the sought pulse sequence is defined as the point in time which is between the times at which the symbol sum (q(k)) exceeds the sum threshold value (S) for the first time and for the last time.

## Revendications

1. Procédé de détection d'un train d'impulsion qui présente les valeurs connues 0 ou 1 et une longueur (LI) connue dans un signal, **caractérisé par** les stades suivants :

   a) on obtient des valeurs d'échantillonnage d'un signal à des instants k qui se succèdent, ces instants k ayant une différence dans le temps de $\Delta k \geq 2$ ;
   b) on détermine si la différence de phase de ces valeurs d'échantillonnage du signal se trouve dans le domaine allant de mod$(\Delta k^*\pi/2,2\pi) - \pi/2$ à mod$(\Delta k^*\pi/2,2\pi) + \pi/2$, ce qui correspond à un symbole « 1 » (a(k)) envoyé ou si elle n'est pas dans ce domaine, ce qui correspond à un symbole de « 0 » (a(k)) envoyé ;
   c) on filtre ces symboles (a(k)) estimés en faisant passer une fenêtre de recherche ayant la longueur (L) de fenêtre de recherche, qui est égale à la longueur (LI) du train d'impulsion à détecter diminuée de $(\Delta k + 1)$, sur les symboles (a(k)) estimés qui se succèdent et chaque fois, on forme dans la fenêtre de recherche la somme (q(k)) des symboles (a(k)) estimés ;
   d) on compare la somme (q(k)) de symboles à une valeur (S) de seuil de somme ; et
   e) si la somme (q(k)) de symboles est supérieure ou égale à la valeur (S) de seuil de somme, c'est une indication de la présence du train d'impulsion étudié et de la localisation dans le temps du train étudié.

2. Procédé suivant la revendication 1, **caractérisé en ce qu'**avant d'exécuter le stade a), on soumet les valeurs d'échantillonnage à une compensation de tension continue.

3. Procédé suivant la revendication 1 ou 2, **caractérisé en ce que** la différence $\Delta k$ dans le temps prend la valeur 2 ou la valeur 5.

4. Procédé suivant l'une des revendications précédentes, **caractérisé en ce que** le train d'impulsion à détecter est un train de 148 zéros par lequel un canal d'organisation est **caractérisé** dans un système de téléphonie mobile.

5. Procédé suivant l'une des revendications précédentes, **caractérisé en ce que** l'on indique comme localisation dans le temps du train d'impulsion étudié l'instant qui est compris entre l'instant où la somme (q(k)) de symboles dépasse pour la première fois la valeur (S) de seuil de somme et celui où elle dépasse pour la dernière fois la valeur (S) de seuil de somme.

FIG 1A

Kanal m-1　　Kanal m　　Kanal m+1

-300　-200　-100　0　100　200　300　f/kHz

FIG 1B

-300　-200　-100　0　100　200　300　f/kHz

FIG 1C

-300　-200　-100　0　100　200　300　f/kHz

# FIG 2

$I(k), Q(k)$

Block 1
Offset-Kompensation

$\Delta k = 2$     $\Delta k = ?$     $\Delta k = 5$

Block 2a
Differentielle Symbolschätzung

$$a(k) = \begin{cases} 1 & I(k)I(k-2) + Q(k)Q(k-2) < 0 \\ 0 & sonst \end{cases}$$

Block 2b
Differentielle Symbolschätzung

$$a(k) = \begin{cases} 1 & Q(k)I(k-5) - I(k)Q(k-5) > 0 \\ 0 & sonst \end{cases}$$

Block 3a
Matchfilter
$q(k) = q(k-1) + a(k) - a(k-145)$

Block 3b
Matchfilter
$q(k) = q(k-1) + a(k) - a(k-142)$

Block 4
Maximumsuche
$q(k) > Schwelle?$